# EUROPEAN PATENT SPECIFICATION

(11) **EP 0 493 406 B1**
(45) Date of publication and mention of the grant of the patent: **22.10.1997**
(21) Application number: 90913008.0
(22) Date of filing: 24.08.1990
(51) Int. Cl.: B28C 1/06, C04B 33/04, B01D 61/14

(54) **PROCESS FOR PRODUCING A KAOLIN CLAY PRODUCT**
VERFAHREN ZUR HERSTELLUNG VON KAOLINGEGENSTÄNDEN
PROCEDE DE FABRICATION D'UN PRODUIT EN ARGILE KAOLINIQUE

(30) Priority: 20.09.1989 US 409839
(43) Date of publication of application: 08.07.1992
(73) Proprietor: ANGLO-AMERICAN CLAYS CORPORATION, Atlanta, GA 30342 (US)
(72) Inventor: MATTHEWS, Kirt, L., Rock Hill, South Carolina 29732 (US)
(74) Representative: Nash, David Allan
(86) International application number: US9004793
(87) International publication number: WO9104143

(56) References cited:
- EP-A- 0 110 036
- EP-A- 0 202 934
- "Ultrafiltration as a Competitive Unit Process", Chemical Engineering Progress, Volume 82, No. 11, page 29-35 (1986)

## Description

The present invention relates generally to the processing of clay and, more particularly, to an improved method for concentrating a beneficiated aqueous kaolin clay slurry which includes at least partially dewatering the kaolin clay slurry via membrane filtration thereby eliminating clay loss commonly encountered during dewatering via conventional techniques.

Kaolin clay has many known applications in industry, including use as a filler in papermaking, a coating for paper, and a pigment in paint. However, crude kaolin clay typically contains various impurities which cause discoloration. Additionally, crude kaolin is typically too abrasive for direct use in these products. Therefore, it is necessary to beneficiate the crude kaolin clay to increase the brightness of the kaolin by removing discoloration impurities and to decrease its abrasiveness by reducing the particle size of the kaolin particles.

In general, such processes for beneficiating crude kaolin clay require that the clay be refined via wet processing as a low solids slurry. Therefore, it is necessary to add substantial amounts of water to the dry crude kaolin clay to form a clay suspension or slurry having a low solids content, generally below 50% solids by weight and typically in the range of 15% to 40% solids by weight. However, for commercial applications, the beneficiated clay slurry must have a much higher solids content. Typically beneficiated kaolin clays are shipped commercially for use in paper making, paper coating and paint making as a high solids slurry having a solids content in the range of 65% to 75% by weight. Therefore, most of the water added to the dry kaolin clay must be removed in order to concentrate the clay solids.

In conventional prior art methods for refining kaolin clay via wet-processing, the crude kaolin clay is dispersed in water, usually with the aid of a dispersing agent, to form a flowable aqueous suspension or slurry. Typically, the aqueous crude clay suspension is then subjected to a fractionation operation to remove coarse and abrasive grit. This fractionation operation is conventionally carried out by centrifugation of the dispersed aqueous clay slurry. Typically, the aqueous kaolin clay slurry is fed to the centrifuge at a solids content in the range of 45% to 50% solids. The fine particle-size fraction, generally 90% finer than 2 microns equivalent spherical diameter in particle size, is recovered as a more dilute dispersed aqueous clay slurry, typically having a solids content ranging from 30% to 40% solids by weight, while the coarser fraction is discarded.

Following fractionation, the recovered aqueous clay slurry may be passed through a magnetic collector to remove at least a portion of any iron-based impurities therefrom. Such impurities discolor the kaolin and, if not removed, reduce the brightness of the beneficiated end product. Alternatively, but usually in conjunction with and subsequent to the magnetic separation operation, the aqueous clay slurry is subjected to a leaching step to remove insoluble iron impurities by reducing the iron therein from the insoluble ferric state to the soluble ferrous state. For such leaching to be effective, the aqueous kaolin clay slurry must be chemically flocculated, typically by acidifying the aqueous kaolin clay slurry prior to the leaching operation by admixing therewith an aqueous acidic solution, such as dilute sulfuric acid, in an amount sufficient to reduce the pH of the aqueous kaolin clay slurry to level in the range of 2.5 to 3.5. Additionally, the solids content of the aqueous kaolin clay slurry is typically reduced to a level of 20% to 30% solids by weight prior to the leaching operation. The leaching is carried out by contacting the aqueous kaolin clay slurry with a bleaching agent. The leached kaolin clay slurry is fully beneficiated at this point and must now be dewatered and further dried to bring the kaolin slurry to commercially acceptable levels.

To dewater a beneficiated clay slurry by conventional prior art practice, the low-solids slurry is typically first passed to a mechanical filter or a electrofilter wherein a limited portion of the water is removed from the slurry. Conventional filters customarily used to carrying out this initial dewatering step include hydrocyclones, filter presses, rotary vacuum filters, electrically augmented vacuum filters, and various electrofilters utilizing electrokinetic phenomena such as electrophoresis and electroosmosis. Such conventional dewatering equipment consumes considerable energy when utilized in commercial scale clay processing plants. Additionally, the filterate from such conventional filters generally contains from 1% to 3% by weight of fine clay particles which should be removed from the filterate at least for economic reasons. To recover clay fines from the filterate, it is conventional practice to pass the filterate to a sedimentation reservoir wherein the filterate is held in a relatively quiescent state to permit the clay particles to settle out of the filterate and collect as a sediment at the bottom of the sedimentation reservoir. When so processing the filterate to remove carry over solids, various polymers are typically added to the filterate to improve and hasten solids sedimentation. This addition of polymers to the filterate not only increases processing costs, but also any excess polymer contained in the clarified supernant water removed from the sedimentation reservoir presents a potential pollution problem if the clarified water is transferred to an impound pond and also may prevent recycle of the clarified water for further use in the clay processing plant.

Typically, when the aqueous kaolin clay slurry is supplied to such a conventional filter, it has a low solids content ranging from 20 to 30% by weight, and the filter cake from the filter would have a solids content of about 50% to 60% by weight. Thus, the slurry would still comprise about 40% to 50% water. Further dewatering on such conventional filters is impractical due to the fine particle size of the solids in the beneficiated clay slurry. Therefore, it is necessary to resort to thermal means to further dewater the beneficiated clay slurry to a commercially acceptable solids content.

Typically, at least a portion of the partially dewatered slurry is passed through a spray dryer or other direct contact-type evaporator such as a gas-fired kiln, wherein the clay slurry is contacted with a drying medium having a temperature of 540°C or more, such as hot air or hot flue gas typically generated from the combustion of natural gas. It is customary to pass only a portion, typically about 30% to 50%, of the clay slurry through the spray dryer and then to re-mix the thoroughly dried clay slurry from the spray dryer with the remaining portion of partially dewatered slurry in a high shear mixer to produce a product clay slurry having a solids content of 65% to 75%.

A problem associated with concentrating clay slurries in spray dryers is that spray drying is a relatively inefficient process and considerable energy must be consumed in the spray drying process in order to evaporate the water in the clay slurry. In conventional prior art spray drying systems used for concentrating clay slurries, the water vapor evaporated from the clay slurry in the drying process is typically vented to the atmosphere in the exhaust gas from the dryer. Thus, the energy expended in evaporating the water vapor is wasted.

Alternatively as disclosed in commonly assigned U.S. Patent 4,687,546, the partially dewatered beneficiated kaolin clay slurry from the preliminary filtering step may be further concentrated by evaporating water therefrom by passing the aqueous clay slurry through one or more non-contact evaporative heat exchangers in heat exchange relationship with a heating vapor comprising water vapor previously evaporated from the clay slurry. In this manner, an energy efficient process is provided for concentrating a beneficiated aqueous clay slurry in that use is made of the heat normally wasted when the flue gas from the spray dryer, together with the water vapor evaporated from the clay during the spray drying process, is vented to the atmosphere. Further, by using indirect heat exchange between the aqueous clay slurry and the heating vapor as a means of evaporating water vapor from the clay slurry, the formation of agglomerates typically encountered in direct contact evaporators is avoided. Additionally, as direct contact with the heating gas is avoided, no degradation in brightness is experienced.

The use of ultrafiltration for the dewatering of kaolin is disclosed in"Ultrafiltration as a competitive unit process", Chemical Engineering Progress, Volume 82, No. 11, pages 29 to 35 (1986).

It is an object of the present invention to provide a method for concentrating an aqueous clay slurry by forcing liquid in the slurry through a membrane filter via a positive gage pressure differential without electrical assist, whereby the filterate liquid, i.e. the permeate, removed from the aqueous clay slurry is substantially free of carry over clay solids thereby eliminating the need to further process the filterate liquid to recover clay solids.

It is a further object of the present invention to provide a process for producing a kaolin clay product comprising beneficiated fine-particle size kaolin clay particles in an aqueous slurry at a commercially shippable solids level wherein the slurry of beneficiated kaolin clay is at least in part dewatered through the use of a membrane filter.

According to the present invention, there is provided:
a process for concentrating solids in an aqueous clay slurry of a beneficiated kaolin, comprising:
   a. subjecting an impure crude kaolin clay to wet processing including a size classification step, so as to provide a dilute aqueous slurry of beneficiated kaolin particles which are dispersed in water and having a particle size distribution such that at least 90% by weight of said particles are of less than 2µ E.S.D.;
   b. preheating said dilute aqueous slurry to a temperature of at least 40°C;
   c. subjecting said preheated dilute aqueous slurry of beneficiated dispersed kaolin particles to membrane filtration by flowing said dilute aqueous slurry parallel to the surface of a semi-permeable membrane, while imposing a pressure differential across the membrane surface; said semi-permeable membrane being substantially impervious to the passage of clay solids therethrough and pervious to the passage therethrough of water molecules, ions and dissolved salts, whereby water molecules, ions and dissolved salts are caused to pass through said semi-permeable membrane, thereby increasing the concentration of the solids in said kaolin slurry; and
   d. collecting the water having passed through said membrane as a substantially solids-free filtrate and, separately therefrom, collecting said aqueous kaolin slurry as a more concentrated aqueous slurry of beneficiated kaolin particles; and
   e. thermally evaporating additional water from the more concentrated aqueous slurry of beneficiated kaolin particles to provide a high solids product slurry.

In accordance with the present invention, a method of concentrating solids in an aqueous clay slurry is provided wherein liquid in the slurry is removed by contacting the aqueous clay slurry with a semi-permeable membrane, by passing the dilute aqueous slurry of beneficiated kaolin along a surface of a semi-permeable membrane, while imposing a pressure differential across the membrane surface whereby water molecules are caused to pass through said semi-permeable membrane thereby increasing the concentration the solids in said kaolin slurry in the direction of flow as said kaolin slurry passes along said membrane. The semi-permeable membrane provided is substantially impervious to the passage of clay solids therethrough, but pervious to the passage of water molecules, ions and dissolved salts therethrough. The liquid having passed through the membrane, i.e. the permeate contains only ions and dissolved salts, such as the sulfates and chlorides of iron, potassium, calcium, or sodium. The aqueous kaolin slurry having passed over the membrane surface is collected separately from the permeate as a more concentrated aqueous slurry of beneficiated fine-particle size kaolin particles. The filterate liquid so removed from the aqueous clay slurry is substantially free of carry over clay solids, that is no solids or so little solids that the need to further process the filterate liquid to recover clay solids, which is necessary when using conventional dewatering equipment, is eliminated. Additionally, as undesirable soluble salts, such as residual salts from the leaching process, pass through the membrane filter with the permeate, this method of dewatering the kaolin clay slurry may advantageously be employed in rinsing the beneficiated kaolin to remove residual leaching salts therefrom which would otherwise degrade the brightness of the beneficiated kaolin product.

In accordance with a preferred embodiment of the present invention, a process is provided for producing a high brightness kaolin clay product comprising beneficiated fine-particle size kaolin clay particles in an aqueous slurry at a solids content of at least 65% by weight. In said process, impure crude kaolin clay is subjected to wet processing in such a manner as to provide a dilute aqueous slurry of beneficiated fine-particle size kaolin particles dispersed in water. To dewater this dilute aqueous slurry of beneficiated kaolin to a commercially shippable level, the dilute aqueous slurry, typically at a solids level in the range of about 15% by weight to less about 40% by weight, is subjected to membrane filtration as outlined above and hereinafter further described to provide a more concentrated aqueous slurry of beneficiated fine-particle size kaolin particles, typically having a solids level in the range of about 40% by weight to about 50% by weight, and a substantially solids-free filterate. Thence, this more concentrated aqueous slurry is subjected to thermal drying to evaporate additional water from the more concentrated aqueous slurry of beneficiated fine-particle size kaolin particles to provide a product slurry having a solids content of at least 65% solids by weight.

To initially concentrate the dilute aqueous slurry of beneficiated fine-particle size kaolin particles dispersed in water, typically at a solids level in the range of about 15% by weight to less about 40% by weight, to a more concentrated slurry, typically having a solids level in the range of about 40% by weight to about 50% by weight, the dilute aqueous slurry of beneficiated kaolin is contacted with a semi-permeable membrane, by passing the beneficiated kaolin slurry along a surface of a semi-permeable membrane in a flow substantially parallel to the membrane surface, while imposing a pressure differential across the membrane surface. Water molecules, ions and dissolved salts pass through said semi-permeable membrane as the kaolin slurry passes along the membrane surface thereby increasing the concentration the solids in said kaolin slurry in the direction of flow as said kaolin slurry passes along said membrane. The membrane is substantially impervious to the passage of clay solids therethrough, but pervious to the passage of water molecules, ions and dissolved salts therethrough. The water having passed through the membrane is collected as a substantially solids-free filterate, while the aqueous kaolin slurry having passed over the membrane surface is collected separately therefrom as a more concentrated aqueous slurry of beneficiated fine-particle size kaolin particles.

Reference will now be made, by way of example, to the drawings in which:
Figure 1 is a schematic block diagram illustrating the beneficiating of kaolin clay in accordance with the process of the present invention;
Figure 2 is a sectional elevation view illustrating the method of the present invention of concentrating solids in a kaolin slurry via membrane filtration;
Figure 3 is a schematic diagram of a processing arrangement for carrying out the dewatering process of the present invention using multiple membrane filters; and
Figure 4 is a schematic diagram of a batch processing arrangement for carrying out of the dewatering process of the present invention using a single membrane filter.

In order to be useful as paper fillers, paper coatings, paint extenders, and for other industrial purposes, naturally occurring kaolin crude clays are subjected to wet processing to remove grit thereby reducing the abrasiveness of the clay and to remove discoloration impurities thereby upgrading the brightness of the clay.

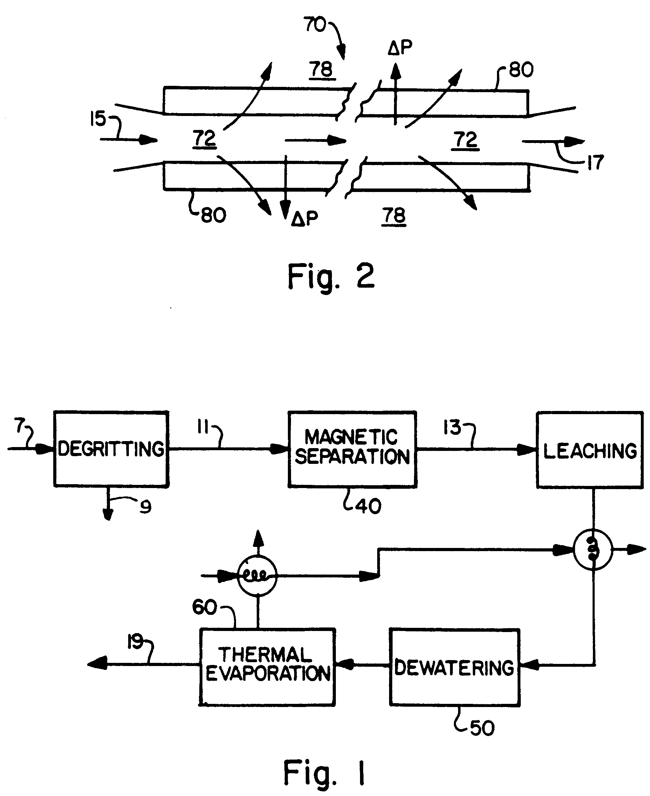

In the wet processing of crude kaolin, as illustrated schematically in Figure 1, the crude kaolin is, as in convention processing, blunged in water, preferably in the presence of a water-soluble dispersing agent, to form an aqueous suspension or slurry 7 of kaolin clay particles at a low solids content, that is less than about 50% by weight, and generally in the range of 15% to 40% solids by weight. The dispersing agent added to slurry may be any one of a number of known, commercially available dispersants including, but not limited to, tetrasodium pyrophosphate, trisodium phosphate, sodium hexametaphosphate, tetrasodium phosphate, sodium tripolyphosphate, sodium silicate, sodium carbonate, sodium salts of weak acids, such as condensed naphthalene sufonic acid and polymeric carboxylic acid, and water-soluble organic polymeric salts, such as sodium polyacrylate and sodium polymethacrylate.

The aqueous kaolin clay slurry 7 formed in the blunging operation is subjected to a degritting operation wherein coarse material is removed therefrom in order to reduce the abrasiveness of the slurry. To degrit the slurry, the crude kaolin slurry 7 is preferably first passed through a screen to remove coarse oversize material and then subjected to centrifugation to fractionate the slurry into an oversize fraction 9 containing the grit and a fine fraction of degritted clay slurry 11. The centrifugation of the clay slurry is carried out by conventional means to yield a degritted fine-particle size kaolin clay slurry 11 having a particle size distribution of at least about 90% by weight of particles less than 2 microns in equivalent spherical diameter. The degritted kaolin clay slurry 11 will have a reduced solids content relative to the crude kaolin slurry supplied to the centrifuge. Typically, the degritted kaolin clay slurry 11 will have a solids content in the range of about 30% to about 40% by weight.

Following degritting, the aqueous kaolin clay slurry 11 may be subjected to magnetic separation to remove certain ferromagnetic impurities therefrom. To carryout the magnetic separation, the aqueous kaolin clay slurry is passed through a matrix of ferromagnetic material positioned in a high intensity magnetic field. As the slurry flows through the matrix, ferromagnetic material in the slurry is attracted to and adheres to the matrix material which itself is magnetized by the magnetic field enveloping the matrix. As the ferromagnetic material in the clay is a discoloration impurity, the aqueous kaolin clay slurry 13 having passed through the magnetic matrix 40 has an improved brightness relative to the aqueous kaolin clay slurry 11.

To further improve the brightness of the kaolin clay, the aqueous kaolin clay slurry 13 is subjected to a leaching step wherein the remaining iron-based discoloration impurities are removed. To leach the clay, the aqueous kaolin clay slurry 13 is contacted with a reducing agent preferably by admixing into the kaolin clay slurry an aqueous solution of the reducing agent. Any one of a number of commercially available reducing agents may be utilized to leach the kaolin, including, but not limited to, sodium dithionite, sodium hypochlorite, sodium hyposulfite, sodium perborate, sodium perchlorate, or other cationic metal salts of the dithionite ion, the hypochlorite ion, the hyposulfite ion, the peroxide ion, the perborate ion, or the perchlorate ion. Of course, admixing the aqueous solution of reducing agent into the clay slurry results in further dilution of the clay slurry. Thus, the beneficiated kaolin clay slurry 15 output from the leaching operation will have a further reduced solids content, typically in the range of 20% to 30% solids by weight.

As noted hereinbefore, to be commercially marketable and economically shippable, the beneficiated kaolin clay product, while in slurry form, must have a high solids content. Typically, the shippable product slurry will have a solids content of at least 65% by weight and, most advantageously, a solids content in the range of 70% to 75% by weight. To concentrate the beneficiated kaolin clay slurry to the desired high solids level, the dilute aqueous kaolin clay slurry is first passed through a dewatering filter 50, to remove a first portion of water therefrom as a filterate liquid. The partially dewatered slurry 17 is then passed through a thermal evaporator 60 wherein additional water is removed from the aqueous clay slurry 17 as a vapor by thermal evaporation. Typically, the partially dewatered slurry 17 from the dewatering filter 50 has solids content of about 50% to about 60% by weight. Thus, the slurry 17 still contains about 40% to 50% water. Accordingly, the further drying by thermal evaporation is required to further concentrate the solids in the slurry to provide the beneficiated kaolin clay product 19 as a commercially marketable and shippable slurry having a solids content in the range of 65% to 75% solids by weight.

In accordance with the present invention, the dewatering filter means 50 for partially dewatering the dilute aqueous clay slurry 15 from a low solids content, typically 20% to 30% by weight solids, to a more concentrated partially dewatered aqueous clay slurry 17, typically having a solids content ranging from about 50% to about 60% solids by weight, comprises a membrane filter means 70 wherein the dilute aqueous slurry 15 of beneficiated kaolin particles is brought in contact with a semi-permeable membrane which is substantially impervious to the passage of clay solids therethrough and pervious to the passage therethrough of water molecules, ions and dissolved salts. As the dilute aqueous slurry 15 of beneficiated kaolin particles is in contact with the semi-permeable membrane, a pressure differential is imposed across the membrane which drives water molecules, ions and dissolved salts through the membrane to be collected as a substantially solids-free permeate, thereby increasing the concentration of kaolin solids in the aqueous slurry.

The thermal evaporator 60 may comprise a direct contact evaporative dryer apparatus such as a spray dryer. A first portion of the partially dewatered kaolin clay slurry 17 is passed to the evaporative dryer and directly contacted therein with a hot drying gas whereby substantially all of the water in this portion of the aqueous clay slurry 17 is removed therefrom by thermal evaporation and entrained in the drying gas exhausted from the evaporative dryer. The dry solids fall out of the drying gas and are collected as a dried clay product having a residual water content typically of less than 1% by weight. This dried kaolin powder is then remixed with the remaining portion of the 50% to 60% solids aqueous clay slurry in an amount sufficient to raise the solids content of the resultant kaolin clay product slurry to the desired level above 65% solids by weight, and typically to a level between 70% and 75% solids by weight, thereby providing the shippable commercially marketable kaolin clay product 19.

In accord with the process disclosed in commonly assigned U.S. Patent 4,642,904, the entire disclosure of which is hereby incorporated by reference, the drying gas exhausted from the evaporative dryer is contacted in a cooling tower with cooling liquid to cause at least a portion of the water vapor evaporated from the aqueous clay slurry to condense. All or a first portion of the condensate may be passed in heat exchange relationship with the aqueous clay slurry 15 passing to the dewatering filter means 50 so as to preheat the clay slurry prior to filtration or all or a second portion of the condensate may be passed in heat exchange relationship with the partially dewatered clay slurry 17 passing from the filtration step so as to preheat the partially dewatered clay slurry prior to evaporative drying, or all or a third portion of the condensate may be passed in heat exchange relationship with ambient drying gas so as to preheat the drying gas being supplied to the evaporative dryer. The cooled condensate is advantageously recycled to the cooling tower to serve as cooling liquid for contacting with the drying gas exhausted from the evaporative dryer.

More advantageously, the thermal evaporator 60 may comprise a non-contact evaporator heat exchanger apparatus as disclosed in commonly assigned U.S. Patent 4,687,546, the entire disclosure of which is also incorporated herein by reference. In accord with the process disclosed therein, the beneficiated aqueous kaolin clay slurry 17 is concentrated from a solids content of about 50% to 60% by weight to a desired solids content of at least 65% by weight by thermally evaporating water therefrom by passing the aqueous clay slurry 17 through one or more non-contact evaporative heat exchangers wherein the clay slurry is passed in indirect heat exchange relationship with a heating medium. This non-contact process for thermally evaporating the slurry is particularly attractive for use in concentrating kaolin clays as water may be evaporated from the clay slurry without the formation of agglomerates or the deterioration of clay brightness inherent in contact-type evaporative drying process.

In accord with the process disclosed in U.S. Patent 4,687,546, a continuous stream of clay slurry to be concentrated may be passed through a single non-contact type heat exchanger, or a plurality of non-contact evaporative heat exchangers disposed in series, in indirect heat exchange relationship with recycled water vapor. That is, water vapor evaporated from the clay slurry in the heat exchanger is collected, compressed to increase its temperature, and recycled to the evaporative heat exchanger or heat exchangers as the heating vapor to evaporate water from the incoming clay slurry. In this manner, an energy efficient process is provided for concentrating a beneficiated aqueous clay slurry in that use is made of the heat normally wasted when the flue gas from the spray dryer together with the water vapor evaporated from the clay during the spray drying process is vented to the atmosphere.

As previously noted, in accordance with the present invention, the dewatering filter means 50 for partially dewatering the dilute aqueous clay slurry 15 from a low solids content, typically 20% to 30% by weight solids, to a more concentrated partially dewatered aqueous clay slurry 17, typically having a solids content ranging from about 50% to about 60% solids by weight, comprises a membrane filtration means. Referring now to Figure 2, an individual membrane filter element 70 most advantageously comprises an axially elongated slurry flow channel 72 bounded at least in part along the length thereof by a semi-permeable membrane 80 which is in turn bounded by a permeate collection passage 78. That is, the semi-permeable membrane is disposed intermediate the slurry flow channel and the permeate collection passage. The semi-permeable membrane is permeated by a multitude of micropores so as to render the membrane previous to liquid, ions and dissolved salts, but impervious to clay solids. Conventionally, a membrane filter module incorporates a plurality of individual membrane filter elements 70 innerconnected in series-flow arrangement.

Various commercially available configurations of membrane filters may be used in carrying out the process of the present invention, including without limitation plate and frame membrane filters, tubular membrane filters. In each of such systems, an axially elongated flow channel 72 having an inlet at one end thereof for receiving the dilute aqueous kaolin slurry 15 and an outlet at the other end thereof for discharging the more concentrated aqueous kaolin slurry 17 is provided which is bounded along at least a part of its length by a semi-permeable membrane 80 selected to be impervious, or nearly so, to the passage of clay solids therethrough and previous to the passage of water molecules, ions and dissolved salts therethrough.

In any case, the aqueous clay slurry to be concentrated is passed axially at a preselected flow rate and under a selected pressure through the flow passageway defined within the elongated flow channel in a substantially parallel flow over the surface of the bounding semi-permeable membrane, a portion of the liquid, together with ions and dissolved salts, in the aqueous clay slurry passes perpendicularly through the semi-permeable membrane surface bordering the flow passageway into the permeate flow passage and is collected in the permeate collection passage 78 as a filterate 75 and conducted away for reuse in the kaolin beneficiation process. The reuse of this filterate is possible as the filterate is substantially solids free due to the substantially solids impervious nature of the semi-permeable membrane.

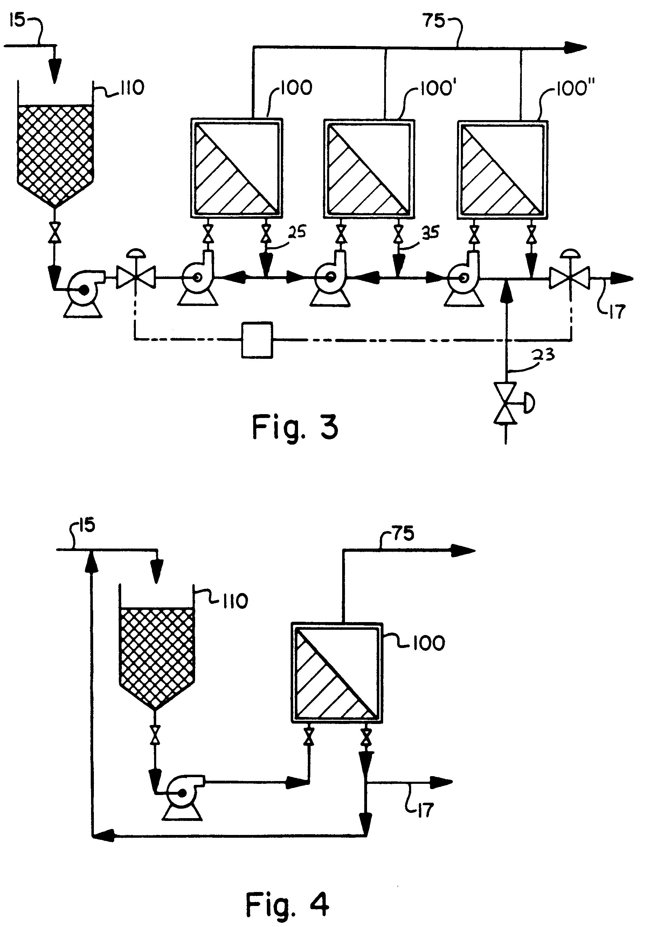

The dewatering process of the present invention may be carried out as illustrated in Figure 3 using a plurality of semi-permeable membrane filter modules 100, or as illustrated in Figure 4 using a single semi-permeable membrane filter module 100. In both arrangements, the aqueous kaolin slurry 15 to be dewatered is supplied to a holding or surge tank 110 and pumped therefrom at a controlled flow rate through at least one membrane filter module 100 wherein a portion of the water therein is removed, together with ions, e.g., residual leaching agent, and dissolved salts, e.g., leaching by-products, as a substantially solids free permeate 75 thereby producing a higher solids, more concentrated aqueous kaolin slurry 17 as a product.

In the arrangement illustrated in Figure 3, a plurality of membrane filter modules 100, comprising at least an upstream filter module and at least a downstream filter module, and generally one or more intermediate filter modules, are staged in series-flow communication. In operation, the aqueous kaolin slurry would be pumped from the holding tank 110 to and through the upstream filter module 100 to remove a first portion of water, ions and dissolved salts therefrom as permeate 75 thereby producing as its discharge a somewhat more concentrated aqueous kaolin slurry 25. A first portion of the aqueous kaolin slurry 25 discharged from the upstream module 100 is recycled to the inlet of the upstream module 100 to be reintroduced thereto with incoming slurry from the tank 110 while the remainder of the aqueous kaolin slurry 25 discharged from the upstream module 100 is pumped to and through the next downstream intermediate filter module 100' wherein additional water, ions and dissolved salts are removed as permeate 75 thereby producing as its discharge a further concentrated aqueous kaolin slurry 35. A first portion of the aqueous kaolin slurry 35 discharged from the first intermediate filter module 100' is recycled through the first intermediate filter module 100', while the remainder thereof is passed to and through the next downstream filter module which may be either an additional intermediate filter module or the final downstream-most filter module 100''. If the next downstream module is an additional intermediate module 100', a portion of the aqueous slurry discharged is recycled and the remainder passed on to the next downstream module. This pattern is repeated until the final downstream filter module 100'' is reached. The discharge slurry from the final downstream-most filter module 100'' constitutes the desired higher solids, more concentrated product slurry 17.

In the single filter module arrangement illustrated in Figure 4, the aqueous kaolin slurry to be dewatered is pumped from holding tank 110 to and through the single filter module 100 wherein a portion of the water therein, together with ions and dissolved salts, is removed therefrom as the permeate 75. All of the aqueous kaolin slurry discharged from the single filter module 100 is reintroduced to the tank 110 and recycled through the single filter module 100 until concentrated to the desired higher solids level. At that point, a portion of the discharge slurry is removed as product slurry 17 while the remainder is recycled to the tank 110 and mixed with incoming make-up feed 15.

In another aspect of the present invention, the effectiveness of semi-permeable membrane filtration in removing ions and dissolved salts with the water molecules when dewatering kaolin slurry may be applied to rinsing leaching by-product and residual leaching agents from the beneficiated kaolin. The presence of such leaching by-product salts and residual leaching agent degrades the brightness of the beneficiated kaolin product particularly if the beneficiated product is spray dried subsequent to conventional dewatering by mechanical means such as rotary vacuum filters. When processed in accord with the present invention, a substantial portion of the leaching by-product salts, residual leaching agents, and other undesirable ions, such as ferrous ions, will be removed when the aqueous kaolin clay slurry from the leaching step is subjected to membrane filtration as the semi-permeable membrane is selected to be impervious, or nearly so, to kaolin solids but pervious to the flow of not only water molecules, but also dissolved salts and ions. Tests have shown that membrane filtration may be used in rinsing leaching by-product salts and residual leaching agent from the kaolin slurry whether the aqueous kaolin slurry being rinsed has a low solids content or a high solids content. The rinsing step may be advantageously incorporated into a multiple filter arrangement such as illustrated in Figure 3 by adding rinse water 23 into the recycle portion of the aqueous kaolin slurry discharge from the downstream-most membrane filter module 100''. As this recycled slurry once again passes through the membrane filter module 100'', further salts and ions washed from the kaolin particles via the rinse water are removed in the permeate generated in the membrane filter module 100''. Preferably, the amount of water removed as permeate in the membrane filter module 100'' is at least equal to amount of rinse water added to the recycle slurry.

The effectiveness of the membrane filter in removing by-product leaching salts and residual leaching agent may also be advantageously utilized not only in conjunction with conventional low solids, flocculated state leaching, but also with high solids, dispersed state leaching. In conventional low solids, flocculated state leaching, the aqueous kaolin slurry, typically at a solids content of 25-35% solids by weight, is acid flocculated at a pH of 2.5 to 3.5 prior to leaching. The acid flocculated kaolin slurry is then leached and subsequently dewatered in the flocculated state to a solids content of 55% to 60% solids by weight by conventional mechanical dewatering means such as a rotary vacuum filter. Prior to further drying the leached kaolin slurry to commercially marketable levels, typically by spray drying a portion of the kaolin slurry and remining the spray dried kaolin particles into the 55% to 60% solids slurry from the rotary vacuum filter, the acid flocculated slurry must be redispersed. To do so, the pH of the slurry is adjusted to a pH of about 6 to 7.5 by the addition of one or more of a number of conventional, commercially available dispersing agents, also known as deflocculants, such as sodium hydroxide, sodium silicate, sodium carbonate, sodium metaphosphate, and sodium polyacrylate. Unfortunately, residual by-product salt and residual dispersing agent remaining in the slurry being subjected to spray drying are known to cause an undesirable degradation in the brightness of the spray dried kaolin particles.

The use of membrane filtration to rinse leached kaolin clay slurry in accordance with the present invention may be readily applied to high solids, dispersed state leaching to produce a high solids product having a higher brightness than obtainable with conventional low solids, acid flocculated leaching. When the aqueous kaolin clay is leached in the dispersed state, it is leached at a pH typically in the range of about 4.0 to 7.5, rather than in a flocculated state at a lower pH. Thus, it is not necessary to add deflocculating agents to the leached slurry in order to redisperse the leached slurry as in conventional processing, as a slurry which is leached in the dispersed state will remain in the dispersed state. Consequently, the degradation of brightness typically experienced due to the presence of residual deflocculating agents and by-products is avoid.

Advantageously, such dispersed state leaching may be carried at a high solids level, i.e., at a solids level of at least about 45% by weight, more advantageously at a solids level of at least about 55% by weight, by carrying out the leaching process interstage of a multiple membrane filter arrangement such as the arrangement illustrated in Figure 3, rather than prior to subjecting the slurry to dewatering. For example, the partially dewatered kaolin slurry leaving the intermediate membrane filter module 100'' could be passed through a leaching stage and leached in a dispersed state at high solids prior to be passed to the downstream-most membrane filter module 100'' wherein the leaching by-product salts and any residual leaching agent would be rinsed from the kaolin slurry as hereinbefore discussed in the permeate without any dilution of the slurry. One process suitable for carrying out such dispersed state leaching at high solids is disposed in commonly assigned U.S. Patent 4,650,521 of Koppelman and Migliorini, for "Processing of Kaolinitic Clays at High Solids Under Acidic Conditions".

Although the particular slurry flow rates, slurry temperature and solids concentration will depend on the particular type of membrane filter utilized and, conversely, the particular type of membrane filter selected will be to some extent dependent upon these slurry parameters, in carrying out the process of the present invention, tests have shown that flux rate, that is the rate of water removal through the membrane is inversely proportional to the concentration of solids in the slurry being dewatered. For example, in one series of tests, the flux rate decreased by a factor of about 10 when the solids concentration in the slurry was increased from 25% solids by weight to 55% solids by weight.

Additionally, tests have shown that the flux rate is directly proportional to the slurry flow rate through the channel which is indicated by the drop pressure from the inlet to the channel to the outlet of the channel, the greater the pressure drop through the channel, the greater the flow rate through the flow channel. For example, in a series of tests, the flux rate decreased by about 40% when the pressure drop through the flow channel, i.e., the slurry flow rate through the flow channel, decreased from a pressure drop of about 70 psi to a pressure drop of about 40 psi. However, tests have shown that the absolute level of the slurry fluid pressure at the inlet of the channel has relatively little effect on flux rate, there being experienced only a slight reduction in flux rate with an increase in the absolute level of the slurry fluid pressure.

The temperature of the kaolin slip being dewatered has also been found to influence the flux rate. Tests have shown that preheating the kaolin slip prior to dewatering results in an increase in passage of water through the membrane. For example, an increase in the temperature of the kaolin slip from ambient temperature (about 27C) to 40C resulted in a 21% increase in flux rate. The kaolin slurry is thus preheated prior to subjecting the slurry to dewatering via membrane filtration, the exact level of preheating being limited by the permissible temperature exposure levels of the materials from which the membrane or other materials in the filtration module can experience without adverse effects.

One particularly advantageous method of preheating the kaolin slurry prior to dewatering is schematically illustrated in Figure 1. As illustrated therein, heat is recovered from the exhaust product of the thermal evaporation unit 60 and utilized to preheat the kaolin slurry 15 being supplied to the dewatering unit 50 which comprises one or more membrane filtration modules 100. If the thermal evaporation unit 60 comprises a spray dryer, heat may advantageously recovered from the exhaust gas of the spray dryer by merely passing a heat exchange fluid in heat exchange relationship with the exhaust gases to recover heat from the exhaust gases and thereafter passing the heat exchange fluid in heat exchange relationship with the kaolin slurry 15, or more advantageously, heat may be recovered from the exhaust gases of the spray dryer in the manner disclosed in the aforementioned U.S. Patent 4,642,904, and the condensate passed in heat exchange relationship with the aqueous clay slurry 15 so as to preheat the slurry prior to dewatering.

Additionally, it is estimated that the use of membrane filtration to dewater kaolin clay slurry in accordance with the present invention will be more economical than the conventional method of dewatering kaolin clay slurry via rotary vacuum filters, particularly with respect to low solids filtration and fine particle size kaolin slurries. Not only do membrane filtration systems generally have a lower capital cost for a given dewatering capacity than rotary vacuum filters, membrane filters will with little doubt be less expensive to operate than rotary vacuum filters. Further, by selecting the membrane filter to be impervious, or nearly so, so that no solids, or at least only a tolerably low level of solids with respect to pollution regulations, the need for impound ponds, as required with conventional dewatering systems to permit carryover of solids to settle out, is eliminated.

## Claims

1. A process for concentrating solids in an aqueous clay slurry of a beneficiated kaolin, comprising:
a. subjecting an impure crude kaolin clay to wet processing including a size classification step, so as to provide a dilute aqueous slurry (15) of beneficiated kaolin particles which are dispersed in water and having a particle size distribution such that at least 90% by weight of said particles are of less than 2µ E.S.D.
b. preheating said dilute aqueous slurry to a temperature of at least 40°C;
c. subjecting said preheated dilute aqueous slurry (15) of beneficiated dispersed kaolin particles to membrane filtration (70, 100) by flowing said dilute aqueous slurry (15) parallel to the surface of a semi-permeable membrane (80), while imposing a pressure differential across the membrane surface; said semi-permeable membrane (80) being substantially impervious to the passage of clay solids therethrough and pervious to the passage therethrough of water molecules, ions and dissolved salts, whereby water molecules, ions and dissolved salts are caused to pass through said semi-permeable membrane (80), thereby increasing the concentration of the solids in said kaolin slurry (15);
d. collecting the water having passed through said membrane (80) as a substantially solids-free filtrate and, separately therefrom, collecting said aqueous kaolin slurry as a more concentrated aqueous slurry (17) of beneficiated kaolin particles; and
e. thermally evaporating (60) additional water from the more concentrated aqueous slurry of beneficiated kaolin particles to provide a high solids product slurry (19).

2. A process as recited in Claim 1 wherein said dilute aqueous slurry (15) of beneficiated kaolin particles is pumped under pressure through an axially elongated flow channel (72) bounded at least in part along the length thereof by a said semi-permeable membrane (80) in a flow substantially parallel to the axis of said elongated flow channel (72), said flow channel (72) having an inlet at one end thereof for receiving said dilute aqueous kaolin slurry (15) and an outlet at the other end thereof for discharging said more concentrated aqueous kaolin slurry (17).

3. A process as recited in Claim 2 wherein said dilute aqueous slurry (15) of beneficiated kaolin particles is pumped through said axially elongated flow channel (72) at a slurry pressure drop from the slurry inlet to the slurry outlet ranging from about 70 psi to about 40 psi.

4. A process as recited in Claim 2 wherein said dilute aqueous slurry (15) of beneficiated kaolin particles is preheated prior to being pumped through said axially elongated flow channel (72).

5. A process as recited in Claim 4 wherein said dilute aqueous slurry (15) of beneficiated kaolin particles is pumped into said axially elongated flow channel (72) at a slurry inlet temperature of at least about 40°C.

6. A process as recited in Claim 1 further comprising subjecting said dilute aqueous slurry (15) of beneficiated kaolin particles to leaching in a dispersed state.

7. A process as recited in Claim 6 further comprising subjecting said dilute aqueous slurry (15) of beneficiated kaolin particles to leaching during the membrane filtration step.

8. A process as recited in Claim 7 wherein the leaching agent is selected from cationic metal salts of the dithionite ion, the hypochlorite ion, the hyposulfite ion, the peroxide ion, the perborate ion, the perchlorate ion, and mixtures thereof.

9. A process as recited in claim 7 wherein the leaching step is carried out at a pH ranging from about 4.0 to 7.5.

10. A process as recited in Claim 1 wherein the dilute aqueous slurry (15) of beneficiated kaolin particles to be subjected to membrane filtration has a solids content of from about 5% to about 50% by weight.

11. A process as recited in claim 1 wherein the dilute aqueous slurry (15) of beneficiated kaolin particles to be subjected to membrane filtration has a solids content of from about 15% to 40% by weight.

12. A process as recited in claim 11 wherein the more concentrated aqueous slurry (17) of beneficiated kaolin particles has a solids content of from about 45% to about 60% solids by weight.

13. A process as recited in Claim 1 wherein the high solids product slurry (19) has a solids content of over 65% by weight.

14. A process as recited in Claim 1 wherein said dilute aqueous slurry (15) of beneficiated kaolin particles is pumped under pressure through an axially elongated flow channel (72) bounded at least in part along the length thereof by a semi-permeable membrane (80) in a flow substantially parallel to the axis of said elongated flow channel, said flow channel (72) having an inlet at one end thereof for receiving said dilute aqueous kaolin slurry (15) and an outlet at the other end thereof for discharging said more concentrated aqueous kaolin slurry (17), said semi-permeable membrane (80) being substantially impervious to the passage of clay solids therethrough and pervious to the passage of water molecules, ions and dissolved salts therethrough.

15. A process as recited in Claim 14 wherein said dilute aqueous slurry (15) of beneficiated kaolin particles is preheated prior to being pumped through said axially elongated flow channel (72).

16. A process as recited in Claim 15 wherein said dilute aqueous slurry (15) of beneficiated kaolin particles is pumped into said axially elongated flow channel (72) at a slurry inlet temperature of at least about 40°C.

17. A process as recited in claim 1 in which the thermal evaporation is carried out by spray drying the more concentrated aqueous slurry of beneficiated kaolin particles to recover a substantially dried kaolin product and thereupon remixing the dried kaolin product with the remaining portion of the aqueous clay slurry to raise the solids content to the desired level.

18. A process as recited in claim 1 in which the thermal evaporation of additional water from the more concentrated aqueous slurry is carried out by passing the slurry through a noncontact evaporative heat exchanger wherein the clay slurry is passed in indirect heat exchange relationship with a heating medium.

## Patentansprüche

1. Verfahren zum Anreichern von Feststoffen in einer wäßrigen Tonschlämmung mit angereichertem Kaolin, umfassend:
a) das Naßbehandeln von unreinem rohen Kaolinton einschließlich einem Größentrennungsschritt, so daß man eine verdünnte wäßrige Schlämmung (15) mit angereicherten Kaolinteilchen erhält, die in Wasser suspendiert sind und eine Teilchengrößeverteilung haben, so daß mindestens 90 Gew.% der Teilchen weniger als 2µ E.S.D. haben,
b) das Vorwärmen der wäßrigen Schlämmung auf eine Temperatur von mindestens 40°C,
c) das Membranfiltern (70, 100) der vorgewärmten wäßrigen Schlämmung (15) mitangereicherten Kaolinteilchen, indem man die verdünnte wäßrige Schlämmung (15) parallel zur Oberfläche einer semipermeablen Membran (80) leitet, während man ein Druckdifferential über der Membranoberfläche anlegt, wobei die semipermeable Membran (80) für die Tonfeststoffe im wesentlichen undurchlässig und für die Wassermoleküle, Ionen und gelösten Salze durchlässig ist, wobei die Wassermoleküle, Ionen und gelösten Salze veranlaßt werden, durch die semipermeable Membran (80) zu wandern, so daß dadurch die Konzentration der Feststoffe in der Kaolinschlämmung (15) erhöht wird,
d) das Aufnehmen des durch die Membran (80) geflossenen Wassers als ein im wesentliches feststofffreies Filtrat und getrennt davon das Aufnehmen der wäßrigen Kaolinschlämmung als eine konzentriertere wäßrige Schlämmung (17) mit angereicherten Kaolinteilchen, und
e) das thermische Verdampfen (60) von zusätzlichem Wasser aus der konzentrierteren wäßrigen Schlämmung mit angereicherten Kaolinteilchen, so daß man eine Schlämmung (19) mit viel Feststoffprodukt erhält.

2. Verfahren nach Anspruch 1, wobei die verdünnte wäßrige Schlämmung (15) mit angereicherten Kaolinteilchen unter Druck durch einen in Längsrichtung verlängerten Strömungskanal (72), dessen Länge mindestens zum Teil von einer semipermeablen Membran (80) umgeben ist, in einem Strom im wesentlichen parallel zur Achse des verlängerten Strömungskanals (72) gepumpt wird, wobei der Strömungskanal (72) an seinem einen Ende einen Einlaß hat, um die wäßrige Kaolinschlämmung (15) aufzunehmen, und an seinem anderen Ende einen Auslaß hat, um die konzentriertere wäßrige Kaolinschlämmung (17) abzugeben.

3. Verfahren nach Anspruch 2, wobei die verdünnte wäßrige Schlämmung (15) mitangereicherten Kaolinteilchen durch den in Längsrichtung verlängerten Strömungskanal (72) bei einem Schlämmungsdruckabfall zwischen Schlämmungseinlaß und Schlämmungsauslaß, der im Bereich von etwa 70 psi bis etwa 40 psi liegt, gepumpt wird.

4. Verfahren nach Anspruch 2, wobei die verdünnte wäßrige Schlämmung (15) mit angereicherten Kaolinteilchen vorgewärmt wird, bevor sie durch den in Längsrichtung verlängerten Strömungskanal (72) gepumpt wird.

5. Verfahren nach Anspruch 4, wobei die verdünnte wäßrige Schlämmung (15) mit angereicherten Kaolinteilchen in den in Längsrichtung verlängerten Strömungskanal (72) bei einer Schlämmungseinlaßtemperatur von mindestens etwa 40°C gepumpt wird.

6. Verfahren nach Anspruch 1, bei dem die verdünnte wäßrige Schlämmung (15) mitangereicherten Kaolinteilchen zudem in suspendiertem Zustand ausgelaugt wird.

7. Verfahren nach Anspruch 6, bei dem die verdünnte wäßrige Schlämmung (15) mit angereicherten Kaolinteilchen zudem beim Memranfiltern ausgelaugt wird.

8. Verfahren nach Anspruch 7, wobei das Auslaugemittel gewählt ist aus kationischen Metallsalzen vom Dithionition, Hypochloridion, Hyposulfition, Peroxidion, Perboration, Perchloration und Gemischen davon.

9. Verfahren nach Anspruch 7, wobei das Auslaugen bei einem pH-Wert im Bereich von etwa 4,0 bis 7,5 erfolgt.

10. Verfahren nach Anspruch 1, wobei die verdünnte wäßrige Schlämmung (15) mit angereicherten Kaolinteilchen, die membrangefiltert wird, einen Feststoffgehalt von etwa 5 Gew.% bis etwa 50 Gew.% hat.

11. Verfahren nach Anspruch 1, wobei die verdünnte wäßrige Schlämmung (15) mit angereicherten Kaolinteilchen, die membrangefiltert wird, einen Feststoffgehalt von etwa 15 Gew.% bis etwa 40 Gew.% hat.

12. Verfahren nach Anspruch 11, wobei die konzentriertere wäßrige Schlämmung (17) mit angereicherten Kaolinteilchen einen Feststoffgehalt von etwa 45 Gew.% bis etwa 60 Gew.% hat.

13. Verfahren nach Anspruch 1, wobei die Schlämmung (19) mit viel Feststoffprodukt einen Feststoffgehalt von über 65 Gew.% hat.

14. Verfahren nach Anspruch 1, wobei die verdünnte wäßrige Schlämmung (15) mit angereicherten Kaolinteilchen unter Druck durch einen in Längsrichtung verlängerten Strömungskanal (72), dessen Länge mindestens zum Teil von einer semipermeablen Membran (80) umgeben ist, in einem Strom im wesentlichen parallel zur Achse des verlängerten Strömungskanals (72) gepumpt wird, wobei der Strömungskanal (72) an seinem einen Ende einen Einlaß hat, um die wäßrige Kaolinschlämmung (15) aufzunehmen, und an seinem anderen Ende einen Auslaß hat, um die konzentriertere wäßrige Kaolinschlämmung (17) abzugeben, wobei die semipermeable Membran (80) für Tonteilchen im wesentlichen undurchlässig und für Wassermoleküle, Ionen und gelöste Salze durchlässig ist.

15. Verfahren nach Anspruch 14, wobei die verdünnte wäßrige Schlämmung (15) mit angereicherten Kaolinteilchen vorgewärmt wird, bevor sie durch den in Längsrichtung verlängerten Strömungskanal (72) gepumpt wird.

16. Verfahren nach Anspruch 15, wobei die verdünnte wäßrige Schlämmung (15) mit angereicherten Kaolinteilchen bei einer Schlämmungseinlaßtemperatur von mindestens etwa 40°C in den in Längsrichtung verlängerten Strömungskanal (72) gepumpt wird.

17. Verfahren nach Anspruch 1, wobei das thermische Verdampfen durch Sprühtrocknen der konzentrierteren wäßrigen Schlämmung mit angereicherten Kaolinteilchen erfolgt, so daß man ein im wesentliches trockenes Kaolinprodukt erhält, und das trockene Kaolinprodukt anschließend mit dem restlichen Anteil der wäßrigen Tonschlämmung erneut vermengt wird, so daß der Feststoffgehalt auf die gewünschte Höhe gebracht wird.

18. Verfahren nach Anspruch 1, wobei das thermische Verdampfen von zusätzlichem Wasser aus der konzentrierteren wäßrigen Schlämmung erfolgt, indem die Schlämmung durch einen berührungslosen Verdampfungswärmeaustauscher geleitet wird, wobei die Tonschlämmung in indirekter Wärmeaustauschbeziehung mit einem Wärmemedium geleitet wird.

## Revendications

1. Procédé de concentration des solides présents dans une suspension aqueuse d'argile de kaolin enrichi, selon lequel :
a. on soumet une argile de kaolin brute impure, à un traitement en milieu humide comprenant une étape de classification en fonction de la taille, de façon à obtenir une suspension aqueuse diluée (15) de particules de kaolin enrichi dispersées dans de l'eau et ayant une distribution de taille particulaire telle qu'au moins 90 % en poids de ces particules aient un diamètre de sphère équivalente inférieur à 2 µ ;
b. on préchauffe ladite suspension aqueuse diluée à une température d'au moins 40 °C ;
c. on soumet ladite suspension aqueuse diluée (15) préchauffée de particules de kaolin enrichi dispersées à une filtration sur membrane (70,100), en faisant circuler ladite suspension aqueuse diluée (15) parallèlement à la surface d'une membrane semi-perméable (80), tandis que l'on impose une différence de pression à travers la surface de la membrane ; ladite membrane semi-perméable (80) étant à peu près imperméable au passage de solides argileux à travers celle-ci et perméable au passage de molécules d'eau, d'ions et de sels dissous à travers celle-ci, de sorte que l'on fait passer les molécules d'eau, les ions et les sels dissous à travers ladite membrane semi-perméable (80), en augmentant la concentration des solides présents dans ladite suspension de kaolin (15) ;
d. on récupère l'eau ayant traversé ladite membrane (80) sous forme d'un filtrat à peu près exempt de solides et on récupère séparément ladite suspension aqueuse de kaolin sous forme d'une suspension aqueuse (17) relativement concentrée de particules de kaolin enrichi ; et
e. on évapore à chaud (60) une quantité supplémentaire d'eau à partir de la suspension aqueuse relativement concentrée de particules de kaolin enrichi, afin d'obtenir une suspension de produit à haute teneur en solides (19).

2. Procédé selon la revendication 1, dans lequel ladite suspension aqueuse diluée (15) de particules de kaolin enrichi, est pompée sous pression à travers un conduit d'écoulement allongé axialement (72) délimité au moins en partie selon sa longueur, par ladite membrane semi-perméable (80), selon un écoulement à peu près parallèle à l'axe dudit conduit d'écoulement allongé (72), ledit conduit d'écoulement (72) comportant un orifice d'entrée à une de ses extrémités destiné à recevoir ladite suspension aqueuse diluée de kaolin (15), et un orifice de sortie à son autre extrémité, destiné à évacuer ladite suspension aqueuse de kaolin relativement concentrée (17).

3. Procédé selon la revendication 2, dans lequel ladite suspension aqueuse diluée (15) de particules de kaolin enrichi, est pompée à travers ledit conduit d'écoulement axialement allongé (72), avec une chute de pression de suspension allant de l'orifice d'entrée de la suspension à l'orifice de sortie de suspension, variant d'environ 70 psi à environ 40 psi.

4. Procédé selon la revendication 2, dans lequel ladite suspension aqueuse diluée (15) de particules de kaolin enrichi, est préchauffée avant d'être pompée à travers ledit conduit d'écoulement axialement allongé (72).

5. Procédé selon la revendication 4, dans lequel ladite suspension aqueuse diluée (15) de particules de kaolin enrichi, est pompée dans ledit conduit d'écoulement axialement allongé (72) à une température d'entrée de suspension d'au moins environ 40 °C.

6. Procédé selon la revendication 1, comprenant en outre le lessivage à l'état dispersé de ladite suspension aqueuse diluée (15) de particules de kaolin enrichi.

7. Procédé selon la revendication 6, comprenant en outre le lessivage au cours de l'opération de filtration sur membrane, de ladite suspension aqueuse diluée (15) de particules de kaolin enrichi.

8. Procédé selon la revendication 7, dans lequel l'agent de lessivage est choisi parmi les sels de métal cationique de l'ion dithionite, de l'ion hypochlorite, de l'ion hyposulfite, de l'ion peroxyde, de l'ion perborate, de l'ion perchlorate, et les mélanges de ceux-ci.

9. Procédé selon la revendication 7, dans lequel l'étape de lessivage est effectuée à un pH d'environ 4,0 à 7,5.

10. Procédé selon la revendication 1, dans lequel la suspension aqueuse diluée (15) de particules de kaolin enrichi, destinée à être soumise à une filtration sur membrane, a une teneur en solides allant d'environ 5 % à environ 50 % en poids.

11. Procédé selon la revendication 1, dans lequel la suspension aqueuse diluée (15) de particules de kaolin enrichi, destinée à être soumise à une filtration sur membrane, a une teneur en solides d'environ 15 % à 40 % en poids.

12. Procédé selon la revendication 11, dans lequel la suspension aqueuse relativement concentrée (17) de particules de kaolin enrichi, a une teneur en solides d'environ 45 % à environ 60 % en poids de solides.

13. Procédé selon la revendication 1, dans lequel la suspension de produit à haute teneur en solides (19), a une teneur en solides supérieure à 65 % en poids.

14. Procédé selon la revendication 1, dans lequel ladite suspension aqueuse diluée (15) de particules de kaolin enrichi, est pompée sous pression à travers un conduit d'écoulement axialement allongé (72), délimité au moins en partie selon sa longueur par une membrane semi-perméable (80), selon un écoulement à peu près parallèle à l'axe dudit conduit d'écoulement allongé, ce conduit d'écoulement (72) comportant un orifice d'entrée à l'une de ses extrémités pour recevoir ladite suspension aqueuse diluée de kaolin (15), et un orifice de sortie à son autre extrémité pour évacuer ladite suspension aqueuse de kaolin relativement concentrée (17), ladite membrane semi-perméable (80) étant à peu près imperméable au passage de solides argileux à travers celle-ci, et perméable au passage des molécules d'eau, des ions et des sels dissous à travers celle-ci.

15. Procédé selon la revendication 14, dans lequel ladite suspension aqueuse diluée (15) de particules de kaolin enrichi, est préchauffée avant d'être pompée à travers ledit conduit d'écoulement axialement allongé (72).

16. Procédé selon la revendication 15, dans lequel ladite suspension aqueuse diluée (15) de particules de kaolin enrichi, est pompée dans ledit conduit d' écoulement axialement allongé (72), à une température d'entrée de suspension d'au moins environ 40 °C.

17. Procédé selon la revendication 1, dans lequel l'évaporation à chaud est effectuée en séchant par atomisation la suspension aqueuse relativement concentrée de particules de kaolin enrichi, afin de récupérer un produit de kaolin à peu près sec, après quoi on remélange le produit de kaolin séché avec la partie restante de la suspension aqueuse d'argile afin d'accroître la teneur en solides jusqu'au niveau requis.

18. Procédé selon la revendication 1, dans lequel l'évaporation à chaud d'une quantité supplémentaire d'eau à partir de la suspension aqueuse relativement concentrée, est effectuée en faisant passer la suspension à travers un échangeur de chaleur à évaporation sans contact dans lequel on soumet la suspension d'argile à un échange de chaleur indirect par rapport à un agent chauffant.
